# EUROPEAN PATENT APPLICATION

(11) **EP 3 789 953 A1**
(43) Date of publication of application: **10.03.2021**
(21) Application number: 20777148.6
(22) Date of filing: 20.03.2020
(51) Int. Cl.: G06Q 50/20

(54) **TEACHING MANAGEMENT METHOD AND SYSTEM, BLOCK CHAIN NODE DEVICE AND COMPUTER STORAGE MEDIUM**

(30) Priority: 22.03.2019 CN 201910224266
(71) Applicant: Launch Tech Co., Ltd, Longgang District Shenzhen Guangdong 518000 (CN)
(72) Inventor: LIU, Xin, Shenzhen, Guangdong 518000 (CN)
(74) Representative: Hamer, Christopher K.
(86) International application number: PCT/CN2020/080330
(87) International publication number: WO 2020/192567

(57) **Abstract**

A method and system for teaching management, a blockchain node device, and a computer storage medium are provided. The method is applicable to a blockchain node device and the method includes the following. An application for a target course is received from a user terminal of a target student, where the target course is taught by a target teacher, and the target course includes multiple single courses. Charging information of the target course is transmitted to the user terminal of the target student, where the charging information includes at least fee information of each of the multiple single courses. Payment information of the target student is received from the user terminal of the target student and the payment information is stored in the blockchain node device. Upon receiving an indication indicative of a finish of one of the multiple single courses from the user terminal of the target student and a user terminal of the target teacher, reward for a single teaching is offered to the target teacher.

## Description

### CROSS-REFERENCE TO RELATED APPLICATION(S)

This application claims priority to Chinese Patent Application No. 201910224266.7, filed on March 22, 2019, and entitled "METHOD AND SYSTEM FOR TEACHING MANAGEMENT, BLOCKCHAIN NODE DEVICE, AND COMPUTER STORAGE MEDIUM", the entire disclosure of which is hereby incorporated by reference in its entirety.

### TECHNICAL FIELD

This disclosure relates to the field of computer, and more particularly to a method and a system for teaching management, a blockchain node device, and a computer storage medium.

### BACKGROUND

In recent years, the education training market (where examples of education training include school subject tutoring for target students in primary and secondary schools, talent and skill cultivating, and extracurricular interest classes) and the job-hunting skills training (for example, computer training) market have undergone a rapid development. The existing teaching and training resources are insufficient to meet the needs of people. As such, a variety of education and training institutions are springing up, thereby providing various choices for those who need.

The existing education and training institutions generally charge fees uniformly, and then pay teacher's salary. In this situation, the teacher may have low passion in teaching. In addition, the teacher merely gives a brief introduction for teaching methods and teaching resources, and then the admission and payment processes may be carried out. In the subsequent teaching process, if an unexpected situation occurs, it is difficult for students to cancel the courses and get a refund.

### SUMMARY

Implementations provide a method and a system for teaching management, a blockchain node device, and a computer storage medium, which can solve the problems of cancel of courses and refund, and improve the teaching enthusiasm of teachers.

According to a first aspect, a method for teaching management is provided. The method is applicable to a blockchain node device and includes the following. An application for a target course from a user terminal of a target student is received, where the target course is taught by a target teacher, and the target course includes multiple single courses. Charging information of the target course is transmitted to the user terminal of the target student, where the charging information includes at least fee information of each of the multiple single courses. Payment information of the target student is received from the user terminal of the target student and the payment information is stored in the blockchain node device. Upon receiving an indication indicative of a finish of one of the multiple single courses from the user terminal of the target student and a user terminal of the target teacher, reward for a single teaching is offered to the target teacher.

In at least one implementation, prior to receiving the application for the target course from the user terminal of the target student, the method further includes the following. Registration application information of the target student is received from the user terminal of the target student, where the registration application information of the target student includes an account name, password information, and identity information of the target student. The password information is verified according to a preset password verification rule. Determine whether the account name exists in a registration information base when the verification of the password information passes. The registration application information of the target student is stored in the blockchain node device based on a determination that the account name fails to exist in the registration information base. At least one recommendation course is obtained according to the identity information with a recommendation model. The at least one recommendation course is transmitted to the user terminal of the target student.

In at least one implementation, prior to receiving, from the user terminal of the target student, the registration application information of the target student, the method further includes the following. Sample recommendation information is obtained, where the sample recommendation information contains sample identity information and a sample recommendation course corresponding to the sample identity information. A calculation is performed, with a preset model, on the sample identity information to obtain a calculated recommendation course. A comparative analysis is conducted on the sample recommendation course and the calculated recommendation course, and parameters of the preset model are adjusted according to results of the comparative analysis, enabling that an error between the calculated recommendation course obtained with the preset model and the sample recommendation course falls within a preset range. The preset model is determined as the recommendation model, where the error between the calculated recommendation course obtained with the preset model and the sample recommendation course falls within the preset range.

In at least one implementation, prior to receiving, from the user terminal of the target student, the registration application information of the target student, the method further includes the following. Registration application information of the target teacher is received from the user terminal of the target teacher, where the registration application information of the target teacher includes at least certification information of the target teacher. Determine, with a third-party certification authentication platform, whether the certification information is true. The registration application information of the target teacher is stored in the blockchain node device, based on a determination that the certification information is true. Course information released through the user terminal of the target teacher by the target teacher is received and the course information is displayed in a front-end page.

In at least one implementation, upon receiving the indication indicative of a finish of one of the multiple single courses from the user terminal of the target student and the terminal of the target teacher, the method further includes the following. Comments of the target student on the single course and a score of the single course provided by the target student are obtained. A score result is obtained with a scoring algorithm according to the score. The comments of the target student, the score result, and teaching records of the target teacher are stored in the blockchain node device.

In at least one implementation, prior to offering the reward for the single teaching to the target teacher, at least one of a system management fee, a fee for use of teaching equipment, or a site use fee in a teaching process of the single course is deducted from the fee of the single course according to a predetermined proportion.

According to a second aspect, a system for teaching management is provided. The system is applicable to a blockchain node device. The system includes a receiving unit and a transmitting unit. The receiving unit is configured to receive an application for a target course from a user terminal of a target student, where the target course is taught by a target teacher, and the target course includes multiple single courses. The transmitting unit is configured to transmit charging information of the target course to the user terminal of the target student, where the charging information includes at least fee information of each of the multiple single courses. The receiving unit is further configured to receive, from the user terminal of the target student, payment information of the target student and store the payment information in the blockchain node device. The transmitting unit is further configured to offer reward for a single teaching to the target teacher, upon receiving an indication indicative of a finish of one of the multiple single courses from the user terminal of the target student and a user terminal of the target teacher.

In at least one implementation, the system further includes a registering unit and a recommending unit. The receiving unit is further configured to receive, from the user terminal of the target student, registration application information of the target student, prior to receiving the application for the target course from the user terminal of the target student, where the registration application information of the target student includes an account name, password information, and identity information of the target student. The registering unit is configured to: verify the password information according to a preset password verification rule; determine whether the account name exists in a registration information base when the verification of the password information passes; store the registration application information of the target student in the blockchain node device based on a determination that the account name fails to exist in the registration information base. The recommending unit is configured to: obtain, with a recommendation model, at least one recommendation course according to the identity information; transmit the at least one recommendation course to the user terminal of the target student.

In one example, the system further includes a determining unit. The receiving unit is further configured to receive, from a user terminal of the target teacher, registration application information of the target teacher, where the registration application information of the target teacher includes at least certification information of the target teacher, prior to receiving, from the user terminal of the target student, the registration application information of the target student. The determining unit is configured to determine, with a third-party certification authentication platform, whether the certification information is true; store the registration application information of the target teacher in the blockchain node device, based on a determination that the certification information is true; receive course information released through the user terminal of the target teacher by the target teacher and display the course information in a front-end page.

In one example, the system further includes a service-management-fee deducting unit. The service-management-fee deducting unit is configured to deduct, according to a predetermined proportion, at least one of a system management fee, a fee for use of teaching equipment, or a site use fee from the fee of the single course, in a teaching process of the single course, prior to offering the reward for the single teaching to the target teacher.

According to a third aspect, an electronic device is provided. The electronic device includes an input device, an output device, a memory, and a processor. The memory stores computer programs which, when executable on the electronic device, cause the electronic device to perform the method described above. The computer programs include program instructions. The processor is configured to invoke the program instructions to perform the method described in the first aspect.

According to a fourth aspect, a computer readable storage medium is provided. The computer readable storage medium is configured to store computer programs including program instructions. The program instructions which, when executed by a processor, cause the processor to perform the method described in the first aspect.

In the method and the system for teaching management, the blockchain node device, and the computer storage medium, the application for the target course is received from the user terminal of the target student, where the target course is taught by the target teacher. The application for the target course is transmitted to the user terminal of the target teacher, and the charging information of the target course is received from the user terminal of the target teacher, and then transmitted to the user terminal of the target student, where the charging information includes at least fee information of each of the multiple single courses. The payment information of the target student is received from the user terminal of the target student and then is stored in the blockchain node device. When the indication indicative of the finish of one of the multiple single courses from the target student and the target teacher is received, reward for a single teaching is offered to the target teacher. Since the payment information of the target student is uploaded to the blockchain platform, the authenticity of the payment information can be ensured, such that the target teacher can teach without worry. In addition, the target teacher is paid in the form of real-time amount division, which can greatly improve the teaching enthusiasm of the target teacher, and achieve the goal of real-time refund if the target student does not want to continue learning the course, in the subsequent teaching process.

### BRIEF DESCRIPTION OF THE DRAWINGS

To describe the technical solutions in the implementations of the present disclosure or in the related art more clearly, the following briefly introduces the accompanying drawings required for describing the implementations or the related art. Apparently, the accompanying drawings in the following description illustrate some implementations of the present disclosure. Those of ordinary skill in the art may also obtain other drawings based on these accompanying drawings without creative efforts.
FIG. 1 is a schematic diagram illustrating architecture of a blockchain platform according to implementations.

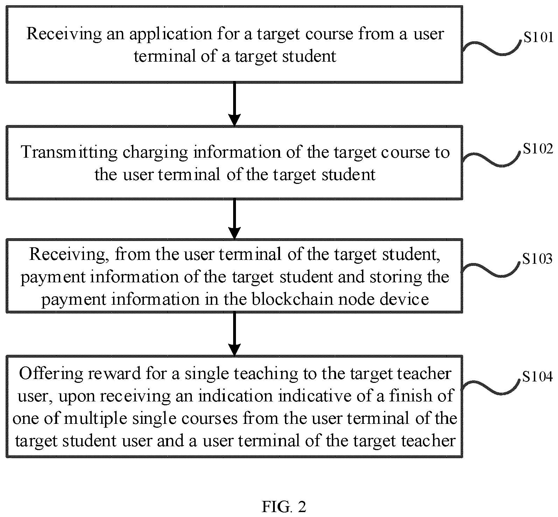

FIG. 2 is a schematic flow chart illustrating a method for teaching management according to implementations.

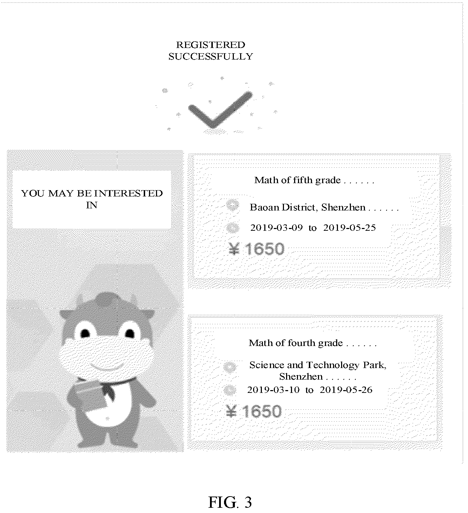

FIG. 3 is a schematic diagram illustrating a course recommendation scenario to which a method for teaching management is applied according to implementations.
FIG. 4 is a schematic structural diagram illustrating a system for teaching management according to implementations.
FIG. 5 is a schematic structural diagram illustrating a blockchain node device according to implementations.

### DETAILED DESCRIPTION

Technical solutions in the implementations will be described in further detail in conjunction with the accompanying drawings. In the following implementations, more details are described to enable that the disclosure can be better understood. However, those skilled in the art will appreciate that some of the features may be omitted in different situations, or may be replaced with other methods. In addition, to avoid the core part of the disclosure being covered by many other descriptions, some other operations related to the disclosure are not illustrated or described in the specification. The reason is that for those skilled in the art, it is not necessary to describe these related operations in detail, which can be fully understood according to the description in the specification and the general technical knowledge in the art.

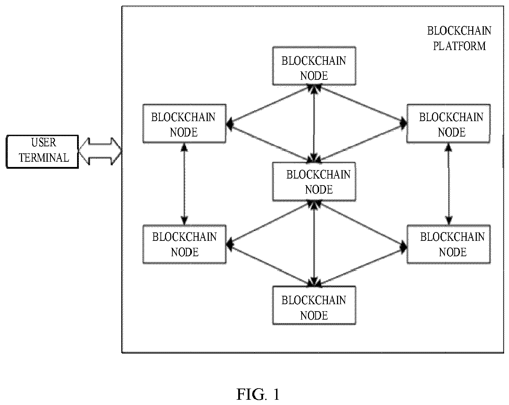

FIG. 1 is a schematic flow chart illustrating a method for teaching management according to implementations. As illustrated in FIG. 1, the method begins at S101.

At S101, an application for a target course is received from a user terminal of a target student, where the target course is taught by a target teacher, and the target course includes multiple single courses.

In some examples, the method is applicable to a blockchain node device. FIG. 1 is a schematic diagram illustrating architecture of a blockchain platform according to implementations. As illustrated in FIG. 1, the blockchain platform includes multiple blockchain nodes in which information uploaded through a user terminal is stored. When the target student selects a course of one teacher to study, the entire process from course selection, fee payment, the end of the course, to course evaluation is recorded in the blockchain nodes. It should be noted that from the perspective of data, the blockchain is a kind of distributed database, which can realize distributed record of data information (that is, the data information can be separately recorded in multiple storage nodes in the system rather than recorded in a centralized organization node) and distributed storage of data information (that is, the data information can be stored in all storage nodes participating in recording data rather than stored in the centralized organization node). From the perspective of time, the blockchain includes multiple blocks. Each of the multiple blocks stores information generated for a period of time, where the information is marked with storage time. The page capital of each block contains all the information of the previous block, and all blocks are connected end to end (that is, each block in the blockchain is linked to its previous block except the first block), so as to form the blockchain. As such, the blockchain is a kind of database that records data in time sequence, and the data cannot be tampered and is trustworthy, such that the authenticity and instantaneity of information can be further ensured. In some examples, the blockchain platform can include more or less user terminals and blockchain nodes, and the blockchain platform illustrated in FIG. 1 is merely illustrative. The disclosure is not limited thereto.

In one example, user terminals of the target student and the target teacher can communicate with one or more blockchain nodes in the blockchain platform, and the blockchain nodes can also communicate with each other. It will be appreciated that communication between various nodes and/or user terminals in the blockchain platform can be achieved through any wired and wireless network, including but not limited to the internet, the wide area network (WAN), the metropolitan area network (MAN), the local area network (LAN), the virtual private network (VPN), the wireless communication network, or the like.

In one example, the target course may include basic teaching subjects, extracurricular teaching subjects, and interest teaching subjects. For example, the basic teaching subjects include traditional basic teaching subjects in schools such as Chinese, mathematics, foreign languages, physics, chemistry, biology, history, politics, geography, and so on. The extracurricular teaching subjects include extracurricular extension teaching subjects such as competitions in various subjects, writing, reading comprehension, summer camp, or the like. The interest teaching subjects include musical instrument, dancing, vocal music, painting, opera, riding, golf, and other talent and skill teaching subjects, and further include training in all kinds of examinations, training of civil service examinations, and training of coding.

In at least one implementation, prior to receiving the application for the target course from the user terminal of the target student, the following can be conducted. Registration application information of the target student is received from the user terminal of the target student, where the registration application information of the target student includes an account name, password information, and identity information of the target student. The password information is verified according to a preset password verification rule. Determine whether the account name exists in a registration information base when the verification of the password information passes. The registration application information of the target student is stored in the blockchain node device based on a determination that the account name fails to exist in the registration information base. According to the identity information, at least one recommendation course is obtained with a recommendation model. The at least one recommendation course is transmitted to the user terminal of the target student. That is to say, during registering, the target student needs to input his/her own identity information, such as age, educational level, and school or educational institution information. Upon inputting the identity information, information of teachers with credible authentication and one or more recommendation courses can be obtained with the recommendation model. It should be noted that the recommendation courses herein refer to basic teaching subjects. If the courses required by the target student are extracurricular teaching subjects or interest teaching subjects, the target student can further input teaching demand information, such that extracurricular teaching subjects or interest teaching subjects can be searched for and recommended to the target student according to course content input by the target student. For example, during registering, if the identity information input by target student A is that age is 8 years old, and he/she is in grade 2 of XX primary school. After target student A is successfully registered, basic courses required for students in the grade 2 of primary school can be obtained with the recommendation model and thus can be recommended to the target student A. If target student A further needs to study piano, piano teachers with credible authentication and piano courses can be searched for through a search function. As can be seen, after the target student has input his/her own identity information and teaching demand information, one or more courses can be recommended to the target student according to previous relevant teaching and training information, such as previously recorded information. The courses recommended may include similar teaching and training courses that the target student has learned before, or teaching and training courses that the target student has not learned before. The teaching and training courses that the target student has not learned before may be obtained according to a teaching and training record that has existed in the blockchain platform, where identity information and teaching demand information in the teaching and training record are similar to that input by the target student, and thus the teaching and training record can be presented to the target student as reference recommendation information, thereby improving the user experience.

In at least one implementation, prior to receiving, from the user terminal of the target student, the registration application information of the target student, the following can be conducted. Sample recommendation information is obtained, where the sample recommendation information contains sample identity information and a sample recommendation course corresponding to the sample identity information. A calculation is performed, with a preset model, on the sample identity information to obtain a calculated recommendation course. A comparative analysis is conducted on the sample recommendation course and the calculated recommendation course, and parameters of the preset model are adjusted according to results of the comparative analysis, enabling that an error between the calculated recommendation course obtained with the preset model and the sample recommendation course falls within a preset range. The preset model is determined as the recommendation model, where the error between the calculated recommendation course obtained with the preset model and the sample recommendation course falls within the preset range. That is, multiple pieces of real and reliable sample data are trained in advance in the blockchain, to obtain the recommendation model. As such, once the identify information (such as age, educational level, etc.) is input by the target student, recommendation results can be automatically generated, which can improve the user experience.

In one example, a calculation is performed, with a preset model based on a neural network algorithm, on the sample identity information. The recommendation model may be a back propagation (BP) neural network model, a Hopfield network model, an adaptive resonance theory (ART) network model, a Kohonen network model, a long short-term memory (LSTM) network model, a residual network model (ResNet), a recurrent neural network (RNN) model, which is not limited herein.

In at least one implementation, prior to receiving, from the user terminal of the target student, the registration application information of the target student, the following can be conducted. Registration application information of the target teacher is received from the user terminal of the target teacher, where the registration application information of the target teacher includes at least certification information of the target teacher. Determine, with a third-party certification authentication platform, whether the certification information is true. The registration application information of the target teacher is stored in the blockchain node device, based on a determination that the certification information is true. Course information released through the user terminal of the target teacher by the target teacher is received and then is displayed in a front-end page. Different from the target student, the certification information of the target teacher after registered needs to be verified, that is, the certification information of the target teacher needs to be in line with a credible authentication standard, including but not limited to, the Ethereum Request for Comment-725 (ERC-725) identity authentication standard, the authentication standard of teaching qualification, or the authentication standard of teaching experience. In fact, the ERC-725 identity authentication standard is a smart contract of the blockchain platform, which forms the basis of identity management and trust, and ensures the implementation of smart contract protocol. In short, the ERC-725 identity authentication standard is an identity authentication and recognition mechanism, which can provide more credible identify authentication for digital contracts. In addition, the registration application information of the target teacher further includes teaching ability information, such as teaching subjects, length of employment, and so on. A system for teaching management can display, according to the certification information and the teaching ability information of the target teacher, teaching subjects of the target teacher in categories in the front-end page for the target student to select. It should be understood that the authenticity of the identity of the target teacher can be guaranteed by verifying the certification information of the target teacher. In addition, since the registration application information of the target teacher is stored in the blockchain node device, and data in the blockchain platform cannot be tampered, the authenticity and reliability of the identity of the target teacher can be further guaranteed.

At S102, charging information of the target course is transmitted to the user terminal of the target student.

As stated above, since course information in the system for teaching management is released by the target teacher, after the target student selects and applies for a course from the recommendation courses or by searching by himself/herself, and the system for teaching management receives the application for the target course from the user terminal of the target student, the system for teaching management can query for the charging information of the target course in the blockchain platform and then transmit the charging information of the target course to the user terminal of the target student, where the charging information of the target course has been uploaded through the user terminal of the target teacher by the target teacher to the blockchain platform. It can be understood that the course information and charging information uploaded by the target teacher are open and cannot be tampered, such that the authenticity of the information guaranteed, and the transparency and accuracy of the training can be improved, thereby improving the use experience of the target student.

In at least one implementation, the charging information includes at least fee information of each of the multiple single courses. After a course is selected, the target student needs to pay for the course, for example, the target student pays according to the standard of course charges. The standard of course charges is that a single course or class hour is determined as a minimum unit for payment. The target student pays only a class period or two class hours at a time. For instance, if multiple class periods of a course are required by the target student, the target student can pay the full amount or pay by the quarter. For another instance, if the target student needs free trial course, the target student can pay by deposit, for example, the target student pays a part of fee before class and pays the remaining part after the class, which is not limited herein. As can be seen, since the fee of target course is paid with the single course or class hour as the minimum unit for payment, if the target student has adjusted the learning plan for a set of courses, for example, the target student does not want to continue learning the following courses due to an emergency, the target student can get a refund under a condition that the target student has paid the full amount, or the target student does not need to pay for following courses under a condition that the target student pays in installment. As such, for the cancellation or subscription of courses, the process is simple and the refund is fast, which greatly improves the use experience of students and teachers.

At S 103, payment information of the target student is received from the user terminal of the target student and stored in the blockchain node device.

In one example, after the target student pays for the target course in a certain manner, all the information about the payment manner, the course name, and the course plan are stored in the blockchain node device. The target teacher who teaches the target course can also know from the blockchain platform that one or more target students have chosen the target course, so that the target teacher can conduct a targeted teaching according to the number of the target students, the educational level of each of the target students, age of each of the target students, and other information of the target students. Since the payment information of the target student is stored in the blockchain platform, and data in the blockchain platform cannot be tampered, the payment information of the target student is true and effective, such that the target teacher can teach without worry even if the target teacher does not get the money before the teaching, thereby improving teaching enthusiasm of the target student and the use experience of the target student.

At S104, reward for a single teaching is offered to the target teacher, upon receiving an indication indicative of a finish of one single course from the user terminals of the target student and the target teacher.

In at least one implementation, prior to offering the reward for the single teaching to the target teacher, the method further includes the following. According to a predetermined proportion, at least one of a system management fee, a fee for use of teaching equipment, or a site use fee is deducted from the fee of the single course, in a teaching process of the single course. Generally, in the process of teaching, teaching equipment (e.g., table, chair, projector, stationery, etc.) and a teaching site need to be used. After the target student has paid the fees for the target course, the fee for use of the teaching equipment and the site use fee need to be deducted from the fee of the single course according to a previous agreement. In addition, for the blockchain platform including multiple blockchain node devices, it is also necessary to manage and maintain connectivity and stability of the networks among the blockchain node devices. As such, after the target student has paid the fees for the target course, the system management fees need to be deducted from the fee of the single course according to the previous agreement.

In one example, after the target student has paid the fees for the target course, the system for teaching management needs to transfer the money to the target teacher and the blockchain platform in real time according to a teaching progress and a preset amount division rule. For example, if target student A applies for multiple courses of multiple teachers, after the teaching of each course is completed, the owner (e.g., training institutions, schools, etc.) of the blockchain platform gets a certain proportion of the fee of the course according to the previous agreement, and then offers a part of the fee of the course to the target teacher according to a sharing ratio. During uploading course information and standard of course charges, different teachers can set different standards of course charges, but the standards of course chargesneed to be assessed, that is, the fees should fall within an appropriate range. For example, the teachers are grouped according to their grades of professional titles. During recommending courses and target teachers to the target student, a sharing coefficient can be set according to the grade of the professional title of the target teacher. Senior teachers charge 1.1 times fee of a basic course, and teachers of special grade charge 1.2 times the fee of the basic course. In addition, in the subsequent sharing process, the sharing coefficient can be adjusted according to the grade of professional title of the teacher or teaching duration on the platform. That is, if the grade of professional title of the teacher is higher, a sharing coefficient of the teacher is higher, or if the duration for which the teacher teaches on the blockchain platform is longer, the sharing coefficient of the teacher is also higher. The specific sharing coefficient can be set according to the actual situation. The disclosure is not limited thereto. Since the target teacher can usually get a reward every time the teaching is completed, such real-time amount division manner can greatly stimulate the teaching enthusiasm of the target teacher, so as to improve the learning experience of the target student. Furthermore, the entire processes from payment to amount division are stored in the blockchain, which can ensure the transparency of amount, and avoid the phenomenon of getting a reward without working, thereby greatly improving the use experience of teachers.

In at least one implementation, upon receiving the indication indicative of a finish of one of the multiple single courses from the user terminal of the target student and the user terminal of the target teacher, the method further includes the following. Comments of the target student on the single course and a score of the single course provided by the target student are obtained. A score result is obtained with a scoring algorithm according to the score. The comments of the target student, the score result, and teaching records of the target teacher are stored in the blockchain node device. That is, after the teaching of each class period is completed, the target student can give a comment on the course and score the course. One or more scores may be obtained from multiple teaching aspects. For example, the one or more scores include a score of the teaching goal in terms of appropriateness of design for knowledge and skills to be mastered, whether the teaching matches the proficiency of the target student, whether the teaching meets the requirements of curriculum standards, and so on. For another example, the one or more scores further include a score of teaching design in terms of whether the teaching has a new teaching concept, whether the teaching reflects a happy teaching concept, whether the teaching has a focus and whether teaching materials are used creatively in the teaching process, and so on. For yet another example, the one or more scores further include a score of teaching process in terms of whether the teaching is for all target students, whether the teaching focus on personality differences, whether the teaching has good teaching atmosphere, and whether the teaching process is clear and smooth. For yet another example, the one or more scores further include a teaching effect score and a teacher quality score. In addition, the score may be given in the form of a hundred-mark system or a five-star system. Different teaching aspects correspond to different weights of the score algorithm. For example, the score of teaching goal has a higher weight, accounting for 40% of the total score, and the teacher quality score has a lower weight, accounting for 10% of the total score. The weight can be set according to the system requirements, which is not limited herein. Since the comments of the target student on the single course and the score of the single course provided by the target student are stored in the blockchain, and data in the blockchain platform cannot be tampered, the comments of the target student are true and effective, which can greatly improve the teaching enthusiasm of the target teacher, and further improve the use experience of the target student.

According to the above implementations, the application for the target course is received from the user terminal of the target student, where the target course is taught by the target teacher. The application for the target course is transmitted to the user terminal of the target teacher, and the charging information of the target course is received from the user terminal of the target teacher, and then transmitted to the user terminal of the target student, where the charging information includes at least fee information of each of the multiple single courses. The payment information of the target student is received from the user terminal of the target student and then is stored in the blockchain node device. When the indication indicative of the finish of one of the multiple single courses from the user terminal of the target student and the user terminal of the target teacher is received, reward for a single teaching is offered to the target teacher. Since the payment information of the target student is uploaded to the blockchain platform, the authenticity of the payment information can be ensured, such that the target teacher can teach without worry. In addition, the target teacher is paid in the form of real-time amount division, which can greatly improve the teaching enthusiasm of the target teacher, and achieve the goal of real-time refund if the target student does not want to continue learning the course in the subsequent teaching process.

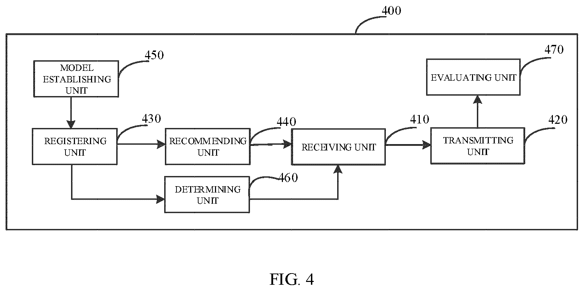

FIG. 4 is a schematic structural diagram illustrating a system for teaching management according to implementations. As illustrated in FIG.4, the system 400 for teaching management includes a receiving unit 410, a transmitting unit 420, a registering unit 430, a recommending unit 440, a model establishing unit 450, a determining unit 460, and an evaluating unit 470.

The receiving unit 410 is configured to receive an application for a target course from a user terminal of a target student, where the target course is taught by a target teacher, and the target course includes multiple single courses.

In some examples, the method is applicable to a blockchain node device. FIG. 1 is a schematic diagram illustrating architecture of a blockchain platform according to implementations. As illustrated in FIG. 1, the blockchain platform includes multiple blockchain nodes in which information uploaded through a user terminal is stored. When the target student selects a course of one teacher to study, the entire process from course selection, fee payment, the end of the course, to course evaluation is recorded in the blockchain nodes. It should be noted that from the perspective of data, the blockchain is a kind of distributed database, which can realize distributed record of data information (that is, the data information can be separately recorded in multiple storage nodes in the system rather than recorded in a centralized organization node) and distributed storage of data information (that is, the data information can be stored in all storage nodes participating in recording data rather than stored in a centralized organization node). From the perspective of time, the blockchain includes multiple blocks. Each of the multiple blocks stores information generated for a period of time, where the information is marked with storage time. The page capital of each block contains all the information of the previous block, and all blocks are connected end to end (that is, each block in the blockchain is linked to its previous block except the first block), so as to form the blockchain. As such, the blockchain is a kind of database that records data in time sequence, and the data cannot be tampered and is trustworthy, such that the authenticity and instantaneity of information can be further ensured. It should be noted that the blockchain platform can include more or less user terminals and blockchain nodes, and the blockchain platform illustrated in FIG. 1 is merely illustrative. The disclosure is not limited thereto.

In one example, user terminals of the target student and the target teacher can communicate with one or more blockchain nodes in the blockchain platform, and the blockchain nodes can also communicate with each other. It will be appreciated that communication between various nodes and/or user terminals in the blockchain platform can be achieved through any wired and wireless network, including but not limited to the internet, the WAN, the MAN, the LAN, the VPN, the wireless communication network, or the like.

In one example, the target course may include basic teaching subjects, extracurricular teaching subjects, and interest teaching subjects. For example, the basic teaching subjects include traditional basic teaching subjects in schools such as Chinese, mathematics, foreign languages, physics, chemistry, biology, history, politics, geography, and so on. The extracurricular teaching subjects include extracurricular extension teaching subjects such as competitions in various subjects, writing, reading comprehension, summer camp, or the like. The interest teaching subjects include musical instrument, dancing, vocal music, painting, opera, riding, golf, and other talent and skill teaching subjects, and further include training in all kinds of examinations, training of civil service examinations, and training of coding.

In at least one implementation, the system further includes a registering unit 430 and a recommending unit 440. The receiving unit 410 is further configured to receive registration application information of the target student from the user terminal of the target student, where the registration application information of the target student includes an account name, password information, and identity information of the target student, prior to receiving the application for the target course from the user terminal of the target student. The registering unit 430 is configured to: verify the password information according to a preset password verification rule; determine whether the account name exists in a registration information base when the verification of the password information passes; store the registration application information of the target student in the blockchain node device based on a determination that the account name fails to exist in the registration information base. The recommending unit 440 is configured to obtain, with a recommendation model, at least one recommendation course according to the identity information, and transmit the at least one recommendation course to the user terminal of the target student. That is to say, during registering, the target student needs to input his/her own identity information, such as age, educational level, and school or educational institution information. Upon inputting the identity information, information of teachers with credible authentication and one or more recommendation courses can be obtained with the recommendation model. It should be noted that the recommendation courses herein refer to basic teaching subjects. If the courses required by the target student are extracurricular teaching subjects or interest teaching subjects, the target student can further input teaching demand information, such that extracurricular teaching subjects or interest teaching subjects can be searched for and recommended to the target student according to course content input by the target student. For example, during registering, if the identity information input by target student A is that age is 8 years old, and he/she is in grade 2 of XX primary school. After target student A is successfully registered, basic courses required for students in the grade 2 of primary school can be obtained with the recommendation model and thus can be recommended to target student A. If target student A further needs to study piano, piano teachers with credible authentication and piano courses can be searched for through a search function. As can be seen, after the target student has input his/her own identity information and teaching demand information, one or more courses can be recommended to the target student according to previous relevant teaching and training information, such as previously recorded information. The courses recommended may include similar teaching and training courses that the target student has learned before, or teaching and training courses that the target student has not learned before. The teaching and training courses that the target student has not learned before may be obtained according to a teaching and training record that has existed in the blockchain platform, where identity information and teaching demand information in the teaching and training record are similar to that input by the target student, and thus the teaching and training record can be presented to the target student as reference recommendation information, thereby improving the user experience.

In at least one implementation, the system further includes a model establishing unit 450. The model establishing unit 450 is configured to obtain sample recommendation information, where the sample recommendation information contains sample identity information and a sample recommendation course corresponding to the sample identity information, prior to receiving, from the user terminal of the target student, the registration application information of the target student. The model establishing unit 450 is further configured to: perform, with a preset model, a calculation on the sample identity information to obtain a calculated recommendation course; conduct a comparative analysis on the sample recommendation course and the calculated recommendation course, and adjust parameters of the preset model according to results of the comparative analysis, enabling that an error between the calculated recommendation course obtained with the preset model and the sample recommendation course falls within a preset range; determine the preset model as the recommendation model, where the error between the calculated recommendation course obtained with the preset model and the sample recommendation course falls within the preset range. That is, multiple pieces of real and reliable sample data are trained in advance in the blockchain, to obtain the recommendation model. As such, once the identify information (such as age, educational level, etc.) is input by the target student, recommendation results can be automatically generated, which can improve the user experience.

In one example, a calculation is performed, with a preset model based on a neural network algorithm, on the sample identity information. The recommendation model may be a BP neural network model, a Hopfield network model, an ART network model, a Kohonen network model, a LST) network model, a ResNe), a RN) model, which is not limited herein.

In at least one implementation, the system further includes a determining unit 460. The registering unit 430 is further configured to receive registration application information of the target teacher from a user terminal of the target teacher, where the registration application information of the target teacher includes at least certification information of the target teacher, prior to receiving, from the user terminal of the target student, the registration application information of the target student. The determining unit 460 is configured to: determine, with a third-party certification authentication platform, whether the certification information is true; store the registration application information of the target teacher in the blockchain node device, based on a determination that the certification information is true; receive course information released through the user terminal of the target teacher by the target teacher and display the course information in a front-end page. Different from the target student, the certification information of the target teacher after registered needs to be verified, that is, the certification information of the target teacher needs to be in line with a credible authentication standard, including but not limited to, the ERC-725 identity authentication standard, the authentication standard of teaching qualification, or the authentication standard of teaching experience. In fact, the ERC-725 identity authentication standard is a smart contract of the blockchain platform, which forms the basis of identity management and trust, and ensures the implementation of smart contract protocol. In short, the ERC-725 identity authentication standard is an identity authentication and recognition mechanism, which can provide more credible identify authentication for digital contracts. In addition, the registration application information of the target teacher further includes teaching ability information, such as teaching subjects, length of employment, and so on. The system for teaching management can display, according to the certification information and the teaching ability information of the target teacher, teaching subjects of the target teacher in categories in the front-end page for the target student to select. It should be understood that the authenticity of the identity of the target teacher can be guaranteed by verifying the certification information of the target teacher. In addition, since the registration application information of the target teacher is stored in the blockchain node device, and data in the blockchain platform cannot be tampered, the authenticity and reliability of the identity of the target teacher can be further guaranteed.

In at least one implementation, the transmitting unit 420 is configured to transmit charging information of the target course to the user terminal of the target student.

As stated above, since course information in the system for teaching management is released by the target teacher, after the target student selects and applies for a course from the recommendation courses or by searching on his/her own, and the system for teaching management receives the application for the target course from the user terminal of the target student, the system for teaching management can query for the charging information of the target course in the blockchain platform and then transmit the charging information of the target course to the user terminal of the target student, where the charging information of the target course has been uploaded through the user terminal of the target teacher by the target teacher to the blockchain platform. It can be understood that the course information and charging information uploaded by the target teacher are open and cannot be tampered, such that the authenticity of the information guaranteed, and the transparency and accuracy of the training can be improved, thereby improving the use experience of the target student.

In at least one implementation, the charging information includes at least fee information of each of the multiple single courses. After a course is selected, the target student needs to pay for the course, for example, the target student pays according to the standard of course charges. The standard of course charges is that a single course or class hour is determined as a minimum unit for payment. The target student pays only a class period or two class hours at a time. For instance, if multiple class periods of a course are required by the target student, the target student can pay the full amount or pay by the quarter. For another instance, if the target student needs to free trial course, the target student can pay by deposit, for example, the target student pays a part of fee before class and pays the remaining part after the class, which is not limited herein. As can be seen, since the fee of target course is paid with the single course or class hour as the minimum unit for payment, if the target student has adjusted the learning plan for a set of courses, for example, the target student does not want to continue learning the following courses due to an emergency, the target student can get a refund under a condition that the target student has paid the full amount, or the target student does not need to pay for following courses under a condition that the target student pays in installment. As such, for the cancellation or subscription of courses, the process is simple and the refund is fast, which greatly improves the use experience of students and teachers.

In at least one implementation, the receiving unit 410 is further configured to receive payment information of the target student from the user terminal of the target student and store payment information of the target student in the blockchain node device.

In one example, after the target student pays for the target course in a certain manner, all the information about the payment manner, the course name, and the course plan are stored in the blockchain node device. The target teacher who teaches the target course can also know from the blockchain platform that one or more target students have chosen the target course, so that the target teacher can conduct a targeted teaching according to the number of the target students, the educational level of each of the target students, age of each of the target students, and other information of the target students. Since the payment information of the target student is stored in the blockchain platform, and data in the blockchain platform cannot be tampered, the payment information of the target student is true and effective, such that the target teacher can teach without worry even if the target teacher does not get the money before the teaching, thereby improving teaching enthusiasm of the target student and the use experience of the target student.

In at least one implementation, the transmitting unit 420 is further configured to offer reward for a single teaching to the target teacher, upon receiving an indication indicative of a finish of one of the multiple single courses from the user terminal of the target student and the user terminal of the target teacher.

In at least one implementation, prior to offering the reward for the single teaching to the target teacher, the transmitting unit 420 is further configured to deduct, according to a predetermined proportion, at least one of a system management fee, a fee for use of teaching equipment, or a site use fee from the fee of the single course, in a teaching process of the single course. Generally, in the process of teaching, teaching equipment (e.g., table, chair, projector, stationery, etc.) and a teaching site need to be used. After the target student has paid the fees for the target course, the fee for use of the teaching equipment and the site use fee need to be deducted from the fee of the single course according to a previous agreement. In addition, for the blockchain platform including multiple blockchain node devices, it is also necessary to manage and maintain connectivity and stability of the networks among the blockchain node devices. As such, after the target student has paid the fees for the target course, the system management fees need to be deducted from the fee of the single course according to the previous agreement.

In one example, after the target student has paid the fees for the target course, the system for teaching management needs to transfer the money to the target teacher and the blockchain platform in real time according to a teaching progress and a preset amount division rule. For example, if target student A applies for multiple courses of multiple teachers, after the teaching of each course is completed, the owner (e.g., training institutions, schools, etc.) of the blockchain platform gets a certain proportion of the fee of the course according to the previous agreement, and then offers a part of fee of the course to the target teacher according to a sharing ratio. During uploading course information and standard of course charges, different teachers can set different standards of course charges, but the standards of course charges need to be assessed, that is, the fees should fall within an appropriate range. For example, the teachers are grouped according to their grades of professional titles. During recommending courses and target teachers to the target student, a sharing coefficient can be set according to the grade of the professional title of the target teacher. Senior teachers charge 1.1 times fee of a basic course, and teachers of special grade charge 1.2 times the fee of the basic course. In addition, in the subsequent sharing process, the sharing coefficient can be adjusted according to the grade of professional title of the teacher or teaching duration on the platform. That is, if the grade of professional title of the teacher is higher, a sharing coefficient of the teacher is higher, or if the duration for which the teacher teaches on the blockchain platform is longer, the sharing coefficient of the teacher is also higher. The specific sharing coefficient can be set according to the actual situation. The disclosure is not limited thereto. Since the target teacher can usually get a reward every time the teaching is completed, such real-time amount division manner can greatly stimulate the teaching enthusiasm of the target teacher, so as to improve the learning experience of the target student. Furthermore, the entire processes from payment to amount division are stored in the blockchain, which can ensure the transparency of amount, and avoid the phenomenon of getting a reward without working, thereby greatly improving the use experience of teachers.

In at least one implementation, the system further includes an evaluating unit 470. The evaluating unit 470 is configured to: obtain comments of the target student on the single course and a score of the single course provided by the target student; obtain, with a scoring algorithm, a score result according to the score; store the comments of the target student, the score result, and teaching records of the target teacher in the blockchain node device. That is, after the teaching of each class period is completed, the target student can give a comment on the course and score the course. One or more scores may be obtained from multiple teaching aspects. For example, the one or more scores include a score of the teaching goal in terms of appropriateness of design for knowledge and skills to be mastered, whether the teaching matches the proficiency of the target student, whether the teaching meets the requirements of curriculum standards, and so on. For another example, the one or more scores further include a score of teaching design in terms of whether the teaching has a new teaching concept, whether the teaching reflects a happy teaching concept, whether the teaching has a focus and whether teaching materials are used creatively in the teaching process, and so on. For yet another example, the one or more scores further include a score of teaching process in terms of whether the teaching is for all target students, whether the teaching focus on personality differences, whether the teaching has good teaching atmosphere, and whether the teaching process is clear and smooth. For yet another example, the one or more scores further include a teaching effect score and a teacher quality score. In addition, the score may be given in the form of a hundred-mark system or a five-star system. Different teaching aspects correspond to different weights of the score algorithm. For example, the score of teaching goal has a higher weight, accounting for 40% of the total score, and the teacher quality score has a lower weight, accounting for 10% of the total score. The weight can be set according to the system requirements, which is not limited herein. Since the comments of the target student on the single course and the score of the single course provided by the target student are stored in the blockchain, and data in the blockchain platform cannot be tampered, the comments of the target student are true and effective, which can greatly improve the teaching enthusiasm of the target teacher, and further improve the use experience of the target student.

According to the above implementations, the application for the target course is received from the user terminal of the target student, where the target course is taught by the target teacher. The application for the target course is transmitted to the user terminal of the target teacher, and the charging information of the target course is received from the user terminal of the target teacher, and then transmitted to the user terminal of the target student, where the charging information includes at least fee information of each of the multiple single courses. The payment information of the target student is received from the user terminal of the target student and then is stored in the blockchain node device. When the indication indicative of the finish of one of the multiple single courses from the user terminal of the target student and the user terminal of the target teacher is received, reward for a single teaching is offered to the target teacher. Since the payment information of the target student is uploaded to the blockchain platform, the authenticity of the payment information can be ensured, such that the target teacher can teach without worry. In addition, the target teacher is paid in the form of real-time amount division, which can greatly improve the teaching enthusiasm of the target teacher, and achieve the goal of real-time refund if the target student does not want to continue learning the course in the subsequent teaching process.

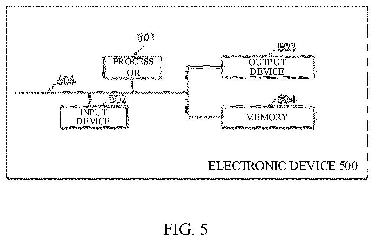

FIG. 5 is a schematic structural diagram illustrating a blockchain node device according to implementations. As illustrated in FIG. 5, the blockchain node device 500 may include one or more processors 501, one or more input devices 502, one or more output devices 503, and a memory 504. The one or more processors 501, the one or more input devices 502, the one or more output devices 503, and the memory 504 are coupled with each other via a bus 505. The memory 502 is configured to store computer programs including program instructions. The processor 501 is configured to execute program instructions stored in memory 502.

According to implementations, the processor 501 may be a central processing unit (CPU). The processor 501 may also be other general-purpose processors, a digital signal processor (DSP), an application specific integrated circuit (ASIC), a field programmable gate array (FPGA), or other programmable logic devices, discrete gates or transistor logic devices, discrete hardware components, etc. The general purpose processor may be a microprocessor, or the processor may be any conventional processor or the like.

The input device 502 may include a touch panel, a fingerprint sensor (for collecting fingerprint information and fingerprint direction information of a user), a microphone, and so on. The output device 503 may include a display (for example, a Liquid Crystal Display (LCD)), a speaker, and so on.

The memory 504 may include a volatile memory, such as a random access memory (RAM), non-volatile memory, such as a read-only memory (ROM), a flash memory, a hard disk drive (HDD), or a solid-state drive (SSD), or a combination of the above types of the memory. The memory 504 may be a centralized memory or a distributed memory, which is not limited herein. The memory 504 is configured to store computer programs, such as computer program instructions, and so on. According to implementations, the memory 504 can provide instructions and data for the processor 501.

According to implementations, the processor 501, the input device 502, the output device 503, the memory 504, and the bus 505 can any method described in the method implementations provided in the disclosure, and the method for teaching management provided in the disclosure can also be implemented in the cloud service cluster, which includes at least one blockchain node device 500. The disclosure is not limited herein.

Implementations further include a computer readable storage medium. The computer readable storage medium stores computer programs, which includes program instructions. The program instructions, when executed by the processor, cause the processor to perform any method described in the method implementations provided in the disclosure, which will not be described herein.

The computer readable storage medium may be an internal storage unit of the terminal of any of the foregoing implementations, such as a hard disk or a memory of the terminal. The computer readable storage medium may also be an external storage device of the terminal, such as a plug-in hard disk, a smart media card (SMC), a secure digital (SD) card, a flash card, and the like that are provided on the terminal. In addition, the computer readable storage medium may also include both the internal storage unit of the terminal and the external storage device of the terminal. The computer readable storage medium is configured to store computer programs and other programs and data required by the terminal. The computer readable storage medium can be further configured to temporarily store data that has been or is to be outputted.

Those of ordinary skill in the art will appreciate that units and algorithmic operations of various examples described in connection with implementations herein can be implemented by electronic hardware, by computer software, or by a combination of computer software and electronic hardware. In order to clearly explain interchangeability of hardware and software, in the above description, configurations and operations of each example have been generally described according to functions. Whether these functions are performed by means of hardware or software depends on the application and the design constraints of the associated technical solution. Those skilled in the art may use different methods for teaching management with regard to each particular application to implement the described functionality, but such methods should not be regarded as lying beyond the scope of the disclosure.

It will be evident to those skilled in the art that, for the sake of convenience and simplicity, in terms of the working processes of the apparatus for teaching management and units thereof, reference can be made to the corresponding processes of the foregoing implementations of the method for teaching management, which will not be repeated herein.

It will be appreciated that the apparatus and method for teaching management disclosed in implementations herein may also be implemented in various other manners. For example, the above apparatus implementations are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device or unit, and may be electrical, mechanical, or otherwise.

Separated units as illustrated may or may not be physically separated. Components or parts displayed as units may or may not be physical units, and may reside at one location or may be distributed to multiple networked units. Some or all of the units may be selectively adopted according to practical needs to achieve desired objectives of the disclosure.

Various functional units described in implementations herein may be integrated into one processing unit or may be present as a number of physically separated units, and two or more units may be integrated into one. The integrated unit may take the form of hardware or a software functional unit.

If the integrated units are implemented as software functional units and sold or used as standalone products, they may be stored in a computer readable storage medium. Based on such an understanding, the essential technical solution, or the portion that contributes to the prior art, or all or part of the technical solution of the disclosure may be embodied as software products. The computer software products can be stored in a storage medium and may include multiple instructions that, when executed, can cause a computing device, e.g., a personal computer, the apparatus for teaching management, a network device, etc. to execute some or all operations of the methods described in various implementations. The above storage medium may include various kinds of media that can store program codes, such as a universal serial bus (USB) flash disk, a mobile hard drive, a ROM, a RAM, a magnetic disk, or an optical disk.

The foregoing implementations are merely some implementations of the disclosure. The protection scope of the disclosure is not limited thereto. Those skilled in the art can easily think of various equivalent modifications or substitutions within the technical scope disclosed in the disclosure, and these modifications or substitutions shall be fall in the scope of protection of the disclosure. Therefore, the protection scope of the disclosure shall be subject to the protection scope of the claims.

## Claims

1. A method for teaching management, being applicable to a blockchain node device and comprising:
receiving an application for a target course from a user terminal of a target student,
wherein the target course is taught by a target teacher, and the target course comprises a plurality of single courses;
transmitting charging information of the target course to the user terminal of the target student, wherein the charging information comprises at least fee information of each of the plurality of single courses;
receiving, from the user terminal of the target student, payment information of the target student and storing the payment information in the blockchain node device; and
offering reward for a single teaching to the target teacher, upon receiving an indication indicative of a finish of one of the plurality of single courses from the user terminal of the target student and a user terminal of the target teacher.

2. The method of claim 1, further comprising:
prior to receiving the application for the target course from the user terminal of the target student,
receiving, from the user terminal of the target student, registration application information of the target student, wherein the registration application information of the target student comprises an account name, password information, and identity information of the target student;
verifying the password information according to a preset password verification rule;
determining whether the account name exists in a registration information base when the verification of the password information passes;
storing the registration application information of the target student in the blockchain node device based on a determination that the account name fails to exist in the registration information base;
obtaining, with a recommendation model, at least one recommendation course according to the identity information; and
transmitting the at least one recommendation course to the user terminal of the target student.

3. The method of claim 2, further comprising:
prior to receiving, from the user terminal of the target student, the registration application information of the target student,
obtaining sample recommendation information, wherein the sample recommendation information contains sample identity information and a sample recommendation course corresponding to the sample identity information;
performing, with a preset model, a calculation on the sample identity information to obtain a calculated recommendation course;
conducting a comparative analysis on the sample recommendation course and the calculated recommendation course, and adjusting parameters of the preset model according to results of the comparative analysis, enabling that an error between the calculated recommendation course obtained with the preset model and the sample recommendation course falls within a preset range; and
determining the preset model as the recommendation model, wherein the error between the calculated recommendation course obtained with the preset model and the sample recommendation course falls within the preset range.

4. The method of claim 2, further comprising:
prior to receiving, from the user terminal of the target student, the registration application information of the target student,
receiving, from the user terminal of the target teacher, registration application information of the target teacher, wherein the registration application information of the target teacher comprises at least certification information of the target teacher;
determining, with a third-party certification authentication platform, whether the certification information is true;
storing the registration application information of the target teacher in the blockchain node device, based on a determination that the certification information is true; and
receiving course information released through the user terminal of the target teacher by the target teacher and displaying the course information in a front-end page.

5. The method of claim 1, further comprising:
upon receiving the indication indicative of a finish of one of the plurality of single courses from the user terminal of the target student and the user terminal of the target teacher,
obtaining comments of the target student on the single course and a score of the single course provided by the target student;
obtaining, with a scoring algorithm, a score result according to the score; and storing the comments of the target student, the score result, and teaching records of the target teacher in the blockchain node device.

6. The method of any of claims 1 to 5, further comprising:
prior to offering the reward for the single teaching to the target teacher, deducting, according to a predetermined proportion, at least one of a system management fee, a fee for use of teaching equipment, or a site use fee from the fee of the single course, in a teaching process of the single course.

7. A system for teaching management, being applicable to a blockchain node device and comprising:
a receiving unit configured to receive an application for a target course from a user terminal of a target student, wherein the target course is taught by a target teacher, and the target course comprises a plurality of single courses; and
a transmitting unit configured to transmit charging information of the target course to the user terminal of the target student, wherein the charging information comprises at least fee information of each of the plurality of single courses; wherein
the receiving unit is further configured to receive, from the user terminal of the target student, payment information of the target student and store the payment information in the blockchain node device; and
the transmitting unit is further configured to offer reward for a single teaching to the target teacher, upon receiving an indication indicative of a finish of one of the plurality of single courses from the user terminal of the target student and a user terminal of the target teacher.

8. The system of claim 7, wherein
prior to receiving the application for the target course from the user terminal of the target student, the receiving unit is further configured to receive, from the user terminal of the target student, registration application information of the target student, wherein the registration application information of the target student comprises an account name, password information, and identity information of the target student;
the system further comprises:
a registering unit configured to:
verify the password information according to a preset password verification rule;
determine whether the account name exists in a registration information base when the verification of the password information passes; and
store the registration application information of the target student in the blockchain node device based on a determination that the account name fails to exist in the registration information base; and
a recommending unit configured to:
obtain, with a recommendation model, at least one recommendation course according to the identity information; and
transmit the at least one recommendation course to the user terminal of the target student.

9. A blockchain node device, comprising:
an input device;
an output device;
a memory configured to store computer programs comprising program instructions; and
a processor configured to invoke the program instructions to perform the method of any of claims 1 to 6.

10. A computer readable storage medium, configured to store computer programs comprising program instructions,
the program instructions which, when executed by a processor, cause the processor to perform the method of any of claims 1 to 6.
